# EUROPÄISCHE PATENTANMELDUNG

(11) **EP 0 889 267 A2**
(43) Veröffentlichungstag der Anmeldung: **07.01.1999**
(21) Anmeldenummer: 98111237.8
(22) Anmeldetag: 18.06.1998
(51) Int. Cl.: F16K 31/06

(54) **Verfahren und Vorrichtung zur geregelten Ansteuerung eines proportional betriebenen Magnetventils**

(30) Priorität: 01.07.1997 DE 19727945
(71) Anmelder: ROBERT BOSCH GMBH, 70442 Stuttgart (DE)
(72) Erfinder: Baumann, Dietmar, 71696 Moeglingen (DE); Haas, Hardy, 71706 Markgroeningen (DE); Leimbach, Klaus-Dieter, 71696 Moeglingen (DE)

(57) **Zusammenfassung**

Es werden ein Verfahren und eine Vorrichtung zur geregelten Ansteuerung eines proportional betriebenen Magnetventils beschrieben. Das beschriebene Verfahren und die beschriebene Vorrichtung zeichnen sich dadurch aus, daß die Magnetventil-Ansteuerung unter Berücksichtigung der Regelung erfolgt, die vor dem betreffenden Zeitpunkt erforderlich war, um das Magnetventil bestimmungsgemäß zu betreiben.

## Beschreibung

Die vorliegende Erfindung betrifft ein Verfahren gemäß dem Oberbegriff des Patentanspruchs 1 und eine Vorrichtung gemäß dem Oberbegriff des Patentanspruchs 5, d.h. ein Verfahren und eine Vorrichtung zur geregelten Ansteuerung eines proportional betriebenen Magnetventils.

Das besagte Magnetventil kann beispielsweise ein in ABSR-Hydroaggregaten von Kraftfahrzeugen zur Druckmodulation eingesetztes 2/2-Sitzventil sein.

2/2-Sitzventile sind Ventile mit zwei Ein- und/oder Ausgängen und zwei Schaltstellungen, wobei die Ein- bzw. Ausgänge in der einen (geöffneten) Schaltstellung miteinander verbunden und in der anderen (geschlossenen) Schaltstellung voneinander getrennt sind. Bei den vorliegend näher betrachteten Ventilen möge es sich um monostabile Ventile, d.h. um solche Ventile handeln, die im stromlosen Zustand entweder geöffnet oder geschlossen sind.

Das Öffnen bzw. Schließen von Magnetventilen wird, wie die Bezeichnung schon andeutet, durch die Aktivierung bzw. Deaktivierung eines im Ventil vorgesehenen (Elektro-)Magneten bewerkstelligt. Die Aktivierung und Deaktivierung des Elektromagneten, genauer gesagt die Bestromung der Spule desselben hat die Bewegung, genauer gesagt das Anziehen oder Loslassen eines Ankers zur Folge, welcher mit dem Verschlußorgan des Ventils in Verbindung steht und dieses dadurch mitbewegt.

Obgleich derartige Ventile ursprünglich dazu vorgesehen waren, um "nur" zwischen den beiden Schaltstellungen hin- und hergeschaltet zu werden, werden sie neuerdings auch proportional betrieben. D.h. sie werden so betrieben, daß das Verschlußorgan eine Zwischenstellung zwischen den Schaltstellungen einnimmt, oder sie werden in schneller Aufeinanderfolge gleich oder unterschiedlich lange geöffnet oder geschlossen, daß sich dabei ein einer stationären Zwischenstellung des Verschlußorgans entsprechender Zustand einstellt.

Eine mögliche Anwendung einer derartigen Ventilansteuerung ist die Einstellung eines definierten Differenzdrucks über dem Ventil (beispielsweise in den bereits erwähnten ABSR-Hydroaggregaten). Da das dynamische Verhalten der genannten Ventile jedoch stark nichtlinear ist, gestaltet sich dies ziemlich schwierig.

Bisher entwickelte Regelungskonzepte zur Druckmodulation mit den genannten Ventilen basieren auf linearen Druckregelungen mit einer Vorsteuerung, wobei durch die Vorsteuerung ein Differenzdruckarbeitspunkt eingestellt wird, um den herum die Regelung stattfindet.

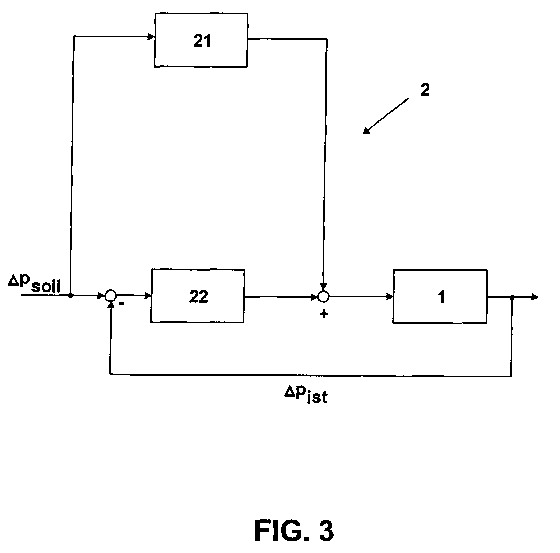

Der grundsätzliche Aufbau einer derartigen Regelung ist in Figur 3 veranschaulicht.

Das Ventil, das es in der Anordnung gemäß Figur 3 anzusteuern gilt, ist dort mit dem Bezugszeichen 1 bezeichnet, und die Regelschaltung, durch die das Ventil angesteuert werden soll, ist mit dem Bezugszeichen 2 bezeichnet. Die Regelschaltung 2 besteht aus einer Vorsteuerungseinheit 21 und einer Regeleinheit 22.

In der Vorsteuerungseinheit 21 ist die Ventilkennlinie gespeichert. Die Vorsteuerungseinheit 21 ist dadurch in der Lage, abhängig von einem Soll-Differenzdruck (Δpₛₒₗₗ), der sich über dem Ventil einstellen soll, ein Steuersignal zu erzeugen, durch welches das Ventil 1 im Normalfall so angesteuert wird, daß der sich tatsächlich über diesem einstellende Ist-Differenzdruck (Δpᵢₛₜ) dem Soll-Differenzdruck entspricht oder zumindest relativ nahe an diesen herankommt. Gegebenenfalls vorhandene Abweichungen zwischen dem Soll-Differenzdruck und dem Ist-Differenzdruck werden durch die Regeleinheit 22 ausgeglichen. Die Regeleinheit 22 erzeugt basierend auf der Differenz zwischen dem Soll-Differenzdruck und dem Ist-Differenzdruck ein Regelsignal, welches zu dem von der Vorsteuerungseinheit 21 erzeugten Steuersignal addiert wird.

Weil der sich über dem Ventil 1 einstellende Ist-Differenzdruck allein durch die Vorsteuerungseinheit 21 zumindest schon relativ nahe an den Soll-Differenzdruck herankommt, kann die Regeleinheit 22 eine linear arbeitende Regeleinheit und mithin relativ einfach aufgebaut sein; durch die Vorsteuerungseinheit 21 wird quasi ein Arbeitspunkt eingestellt, um den herum eine lineare Regelung erfolgen kann.

Die Erfahrung zeigt, daß die Regelschaltung 2 trotz deren scheinbar guten Eignung zur Ventilansteuerung bisweilen nicht in der Lage ist, den Ist-Differenzdruck schnell, genau und dauerhaft auf den Soll-Differenzdruck zu bringen. Ursache hierfür ist insbesondere die starke Abhängigkeit der Ventilkennlinie von der Temperatur.

Mit steigender Temperatur der Spule des Elektromagneten des Ventils 1 nimmt - bei ansonsten unveränderten Bedingungen - der durch die Spule fließende Strom ab, wodurch auch die auf das Verschlußorgan des Ventils ausgeübte Kraft abnimmt und das Verschlußorgan größeren Druckdifferenzen nicht mehr standhalten kann.

Dieser Effekt kann bis zu einem gewissen Umfang durch die Regeleinheit 22 ausgeglichen werden. Bei größeren Temperaturschwankungen bedarf es indes spezieller Maßnahmen zur Eliminierung der genannten Effekte.

Die durch Temperaturschwankungen hervorgerufenen Effekte können durch Vorsehen einer unterlagerten Stromregelung kompensiert werden. Dabei wird zwischen das Ventil 1 und die Regelschaltung 2 eine (in der Figur 3 nicht gezeigte) Stromregeleinheit eingefügt, der es obliegt, den durch das Ventil fließenden (Ist-)Strom auf einen jeweiligen Soll-Wert zu regeln.

Dadurch kann das Ventil 1 temperaturunabhängig bestimmungsgemäß betrieben werden. Andererseits bedingt das Vorsehen einer unterlagerten Stromregelung jedoch einen erheblichen technischen Aufwand. Dies gilt insbesondere für die Ermittlung des durch das Ventil fließenden Ist-Stromes (Umrechnung aus einem sich an einem geeichten Präzisionswiderstand einstellenden Spannungsabfalls; mehr oder weniger häufiger Abgleich der Meßeinrichtung etc.).

Der vorliegenden Erfindung liegt daher die Aufgabe zugrunde, das Verfahren gemäß dem Oberbegriff des Patentanspruchs 1 bzw. die Vorrichtung gemäß dem Oberbegriff des Patentanspruchs 5 derart weiterzubilden, daß temperaturbedingte Fehlansteuerungen des Ventils auf einfache Weise zuverlässig verhinderbar sind.

Diese Aufgabe wird erfindungsgemäß durch die im kennzeichnenden Teil des Patentanspruchs 1 (Verfahren) bzw. die im kennzeichnenden Teil des Patentanspruchs 5 (Vorrichtung) beanspruchten Merkmale gelöst.

Demnach ist vorgesehen,
- daß die Magnetventil-Ansteuerung unter Berücksichtigung der Regelung erfolgt, die vor dem betreffenden Zeitpunkt erforderlich war, um das Magnetventil bestimmungsgemäß zu betreiben (kennzeichnender Teil des Patentanspruchs 1) bzw.
- daß eine Regelschaltung vorgesehen ist, welche dazu ausgelegt ist, die Magnetventil-Ansteuerung unter Berücksichtigung der Regelung durchzuführen, die vor dem betreffenden Zeitpunkt erforderlich war, um das Magnetventil bestimmungsgemäß zu betreiben (kennzeichnender Teil des Patentanspruchs 5).

Den vorgeschlagenen Maßnahmen liegt die Erkenntnis zugrunde, daß aus der Regelung, die erforderlich ist, um einen sich am Magnetventil einstellenden Ist-Wert auf einen vorgegebenen Soll-Wert zu bringen, auf die am Ventil herrschenden Verhältnisse geschlossen werden kann.

Dadurch kann eine adaptive Magnetventil-Ansteuerung durchgeführt werden, welche ohne zusätzliche Sensoren und Meßeinrichtungen zur Ermittlung der Parameter auskommt, deren Einfluß es zu eliminieren gilt.

Die besagte Adaption kann beispielsweise in einer während der Ventilansteuerung (online) erfolgenden Kennlinienanpassung bzw. einer darauf basierenden Arbeitspunktverschiebung beste hen, deren Art und Umfang von den jeweils am Ventil herrschenden Verhältnissen abhängen.

Ein solche Arbeitspunktverschiebung bringt den besonderen Vorteil mit sich, daß die sich zwischen Ist- und Soll-Werten einstellenden Differenzen - sofern überhaupt vorhanden - im wesentlichen unabhängig von den am Ventil herrschenden Verhältnissen stets nur relativ klein sind und folglich durch eine relativ einfach aufgebaute (linear arbeitende) Regeleinheit schnell vollständig zum Verschwinden gebracht werden können.

Auf die im Stand der Technik eingesetzte unterlagerte Stromregelung kann verzichtet werden.

Es wurden mithin ein Verfahren und eine Vorrichtung gefunden, durch die durch zeitlich veränderliche Verhältnisse am Ventil bedingte Fehlansteuerungen desselben auf einfache Weise zuverlässig verhinderbar sind.

Vorteilhafte Weiterbildungen der Erfindung sind Gegenstand der Unteransprüche.

Die Erfindung wird nachfolgend anhand eines Ausführungsbeispiels unter Bezugnahme auf die Zeichnung näher erläutert. Es zeigen
- Figur 1: ein Ausführungsbeispiel der erfindungsgemäßen Anordnung zur geregelten Ansteuerung eines proportional betriebenen Magnetventils,
- Figur 2: eine grafische Darstellung der Betriebs- und Pausephasen in der Magnetventil-Ansteuerung, und
- Figur 3: eine herkömmliche Anordnung zur geregelten Ansteuerung eines proportional betriebenen Magnetventils.

Das Magnetventil, dessen Ansteuerung nachfolgend näher beschrieben wird, ist das eingangs bereits erwähnte und beschriebene 2/2-Sitzventil. Die Anwendung der Erfindung ist jedoch nicht auf die Ansteuerung derartiger Magnetventile beschränkt. Sie ist grundsätzlich bei proportional betreibbaren Magnetventilen jeder Art einsetzbar.

Das Ventil soll im vorliegend betrachteten Beispiel so angesteuert werden, daß sich über diesem ein vorbestimmter Differenzdruck einstellt. Auch hierauf besteht jedoch keine Einschränkung. Die Erfindung ist auch einsetzbar, wenn es eine beliebige andere Größe als die sich über dem Ventil einstellende Druckdifferenz ist, die durch die Ansteuerung auf einen bestimmten Soll-Wert gebracht werden soll.

Durch die beschriebene Ventilansteuerung wird der Abhängigkeit derselben von der Temperatur der Spule des Ventils Rechnung getragen. Grundsätzlich kann auf die nachfolgend beschriebene Art und Weise die Ventilansteuerung auch an beliebige andere Umstände adaptiert werden.

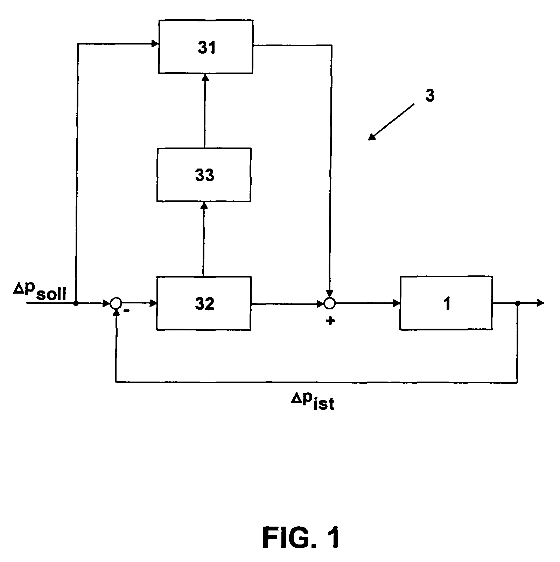

Eine mögliche Ausführungsform der erfindungsgemäßen Regelschaltung zur Ansteuerung des genannten Ventils ist in Figur 1 veranschaulicht; das anzusteuernde Ventil ist dort (wegen der Übereinstimmung mit dem Ventil 1 aus Figur 3) mit dem Bezugszeichen 1, und die dieses ansteuernde Regelschaltung mit dem Bezugszeichen 3 bezeichnet.

Die Regelschaltung 3 besteht aus einer Vorsteuerungseinheit 31, einer Regeleinheit 32 und einer Kennlinien-Adaptionseinheit 33.

Die Vorsteuerungseinheit 31 entspricht im wesentlichen der Vorsteuerungseinheit 21 gemäß Figur 3. Auch in ihr ist eine Ventilkennlinie gespeichert, unter Berücksichtigung welcher ein Steuersignal zur Ansteuerung des Ventils 1 erzeugt wird. Allerdings ist die Ventilkennlinie nicht fest eingespeichert, sondern (selbst während des Betriebs) durch die Kennlinien-Adaptionseinheit 33 oder auf Veranlassung derselben veränderbar oder durch beliebige andere Ventilkennlinien ersetzbar. Das von der Vorsteuerungseinheit 31 erzeugte Steuersignal wird so erzeugt, daß der sich über dem Ventil 1 einstellende Ist-Differenzdruck (Δpᵢₛₜ) einem vorgegebenen Soll -Differenzdruck (Δpₛₒₗₗ) entspricht oder diesem zumindest relativ nahe kommt.

Gegebenenfalls vorhandene Abweichungen zwischen dem Soll-Differenzdruck und dem Ist-Differenzdruck werden durch die Regeleinheit 32 ausgeglichen; die Regeleinheit 32 erzeugt basierend auf der Differenz zwischen dem Soll-Differenzdruck und dem Ist-Differenzdruck ein Regelsignal, welches zu dem von der Vorsteuerungseinheit 31 erzeugten Steuersignal addiert wird.

Die Regelschaltung 3 ist, wie vorstehend bereits erwähnt wurde, so ausgelegt, daß der sich über dem Ventil 1 einstellende Ist-Differenzdruck allein unter Verwendung des von der Vorsteuerungseinheit 31 erzeugten Steuersignals zur Ventilansteuerung dem Soll-Differenzdruck entspricht oder nahe an diesen herankommt. Da die Ventilkennlinie stark von der Temperatur der Spule des Ventils abhängt, ist die angestrebte Ventilansteuerung jedoch nicht immer erreichbar.

Zur Vermeidung dessen ist im Ausführungsbeispiel gemäß Figur 1 die Kennlinien-Adaptionseinheit 33 vorgesehen. Die Kennlinien-Adaptionseinheit 33 erhält von der Regeleinheit 32 Daten übermittelt, die den integrierenden Anteil (I-Anteil) der Regelung durch die Regeleinheit 32 repräsentieren. Dieser I-Anteil wird von der Kennlinien-Adaptionseinheit dazu verwendet, die in der Vorsteuerungseinheit 31 gespeicherte Ventilkennlinie an die sich verändernden Zustände anzupassen (zu adaptieren). Die Zusammenhänge zwischen dem I-Anteil der Regeleinheit 32 und der Ventilkennlinien-Adaption müssen der Kennlinien-Adaptionseinheit 33 bekannt sein; sie lassen sich empirisch ermitteln oder (näherungsweise) aus theoretischen Betrachtungen herleiten und sind in der Kennlinien-Adaptionseinheit 33 in Form einer Tabelle, eines Kennfeldes oder einer Umrechnungsformel gespeichert.

Dem Vorsehen der Kennlinien-Adaptionseinheit 33 sowie deren Aufbau, Funktion und Wirkungsweise liegt die Erkenntnis zugrunde, daß es exakt der I-Anteil der Regelung durch die Regeleinheit 32 ist, der die durch Temperatureinflüsse bedingten Kennlinienveränderungen ausgleicht.

Verwendet man diesen I-Anteil zur Adaption der in der Vorsteuerungseinheit 31 gespeicherten Ventilkennlinie, so kann dadurch erreicht werden, daß der sich über dem Ventil 1 einstellende Ist-Differenzdruck allein durch die Vorsteuerungseinheit 31 und vor allem unabhängig von der jeweiligen Temperatur mit dem Soll-Differenzdruck übereinstimmt oder jedenfalls sehr nahe an diesen herankommt.

Durch die Regeleinheit 31 müssen daher - wenn überhaupt - allenfalls relativ kleine Differenzen zwischen dem Ist-Differenzdruck und dem Soll-Differenzdruck ausgeglichen werden. Es kann deshalb eine linear arbeitende und mithin relativ einfach aufgebaute Regeleinheit 32 zum Einsatz kommen; selbstverständlich kann jedoch auch eine beliebige andere Regeleinheit verwendet werden.

In Fällen, in denen es nicht oder jedenfalls nicht nur darum geht, (beispielsweise auf den temperaturbedingten Ventilkennlinienveränderungen basierende) stationäre Regelfehler auszugleichen, kann es angebracht sein, alternativ oder zusätzlich zum I-Anteil der Regelung durch die Regeleinheit 32 beliebige andere Anteile der Regelung (D-Anteil, P-Anteil, ...) zur Kennlinien-Adaption zu berücksichtigen. Es muß auch nicht unbedingt eine Kennlinie sein, die durch die Kennlinien-Adaptionseinheit 33 adaptiert wird; es sind vielmehr beliebige für die Ventilansteuerung bedeutsame Parameter und Zusammenhänge, die der Adaption unterworfen werden können.

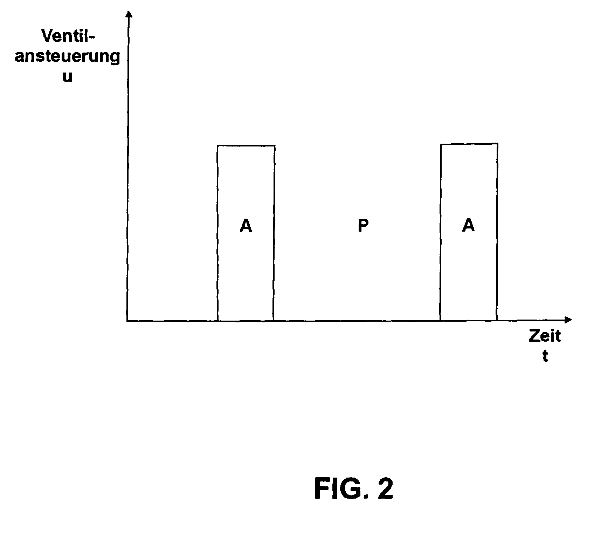

Zumindest zeitweise kann zusätzlich oder alternativ eine Temperaturverlaufs-Schätzung bzw. eine darauf basierende Kennlinien-Adaption durchgeführt werden. Dies erweist sich beispielsweise, aber zweifelsohne nicht ausschließlich dann von Vorteil, wenn sich beim Betrieb des Ventils wie in Figur 2 veranschaulicht aktive Phasen A mit längeren inaktiven Phasen bzw. zwischenzeitlichen Pausen P abwechseln. Dann kann nämlich während der aktiven Phasen die vorstehend beschriebene Kennlinien-Adaption, und während der Pausen eine auf einer Temperaturverlaufs-Schätzung basierende Kennlinien-Adaption durchgeführt werden.

Bei der Temperaturverlaufsschätzung wird geschätzt, wie weit sich die Ventiltemperatur während der jeweiligen Pausen P abkühlt. Wird das Ventil nach einer Pause P wieder in den aktiven Zustand versetzt, so kann die Vorsteuerungseinheit 31 von Beginn einer jeden aktiven Phase A an auf eine Ventilkennlinie zurückgreifen, die an die vermutlich herrschenden Verhältnisse adaptiert ist. Die Zeit, die vom Beginn einer jeweiligen aktiven Phase bis zu dem Zeitpunkt, zu dem die Druckdifferenzregelung optimal an die gegebenen Verhältnisse adaptiert arbeitet, läßt sich dadurch auf ein Minimum reduzieren.

Die zu schätzende Ventiltemperatur hängt unter anderem von der Anfangstemperatur, von der an die Abkühlung erfolgt, der Umgebungstemperatur und der Abkühldauer ab. Die Zusammenhänge zwischen der Ventiltemperatur und den genannten Parametern werden empirisch ermittelt oder näherungsweise unter Zugrundelegung theoretischer Betrachtungen berechnet und in der Kennlinien-Adaptionseinheit 33 in Form von Tabellen, Kennlinien oder Berechnungsformeln gespeichert.

Die Anfangstemperatur ist die Temperatur am Ende einer jeweiligen aktiven Phase A und läßt sich aus der adaptierten Ventilkennlinie ermitteln, mit welcher die Vorsteuerungseinheit zu diesem Zeitpunkt arbeitet.

Wie aus den vorstehenden Erläuterungen ersichtlich ist, müssen in der Kennlinien-Adaptionseinheit 33 "nur" Zuordnungen und/oder Berechnungen durchgeführt werden; die Kennlinien-Adaptionseinheit kann daher softwaremäßig, also mit minimalem technischen Aufwand realisiert werden.

Unabhängig davon gestaltet sich die praktische Realisierung der Kennlinien-Adaptionseinheit 33 erheblich einfacher als die praktische Realisierung der bislang anstelle der Kennlinienadaption verwendeten unterlagerten Stromregelung.

Durch das erfindungsgemäße Verfahren und die erfindungsgemäße Vorrichtung ist es möglich, durch zeitlich veränderliche Verhältnisse am Ventil bedingte Fehlansteuerungen desselben auf einfache Weise zuverlässig zu verhindern.

## Patentansprüche

1. Verfahren zur geregelten Ansteuerung eines proportional betriebenen Magnetventils, **dadurch gekennzeichnet**, daß die Magnetventil-Ansteuerung unter Berücksichtigung der Regelung erfolgt, die vor dem betreffenden Zeitpunkt erforderlich war, um das Magnetventil bestimmungsgemäß zu betreiben.

2. Verfahren nach Anspruch 1**, dadurch gekennzeichnet**, daß die Magnetventil-Ansteuerung unter Verwendung der an die herrschenden Verhältnisse adaptierten Kennlinie des anzusteuernden Magnetventils erfolgt.

3. Verfahren nach Anspruch 2, **dadurch gekennzeichnet**, daß die Kennlinie unter Berücksichtigung der Regelung, die vor dem betreffenden Zeitpunkt erforderlich war, um das Magnetventil bestimmungsgemäß zu betreiben, an die herrschenden Verhältnisse adaptiert wird.

4. Verfahren nach Anspruch 2 oder 3, **dadurch gekennzeichnet**, daß die Kennlinie unter Berücksichtigung einer Abschätzung der herrschenden Verhältnisse an diese adaptiert wird.

5. Vorrichtung zur geregelten Ansteuerung eines proportional betriebenen Magnetventils, **gekennzeichnet durch** eine Regelschaltung (3), welche dazu ausgelegt ist, die Magnetventil-Ansteuerung unter Berücksichtigung der Regelung durchzuführen, die vor dem betreffenden Zeitpunkt erforderlich war, um das Magnetventil bestimmungsgemäß zu betreiben.

6. Vorrichtung nach Anspruch 5, **dadurch gekennzeichnet**, daß die Regelschaltung (3) eine Vorsteuerungseinheit (31) und eine Regeleinheit (32) enthält, wobei durch die Vorsteuerungseinheit ein von den herrschenden Verhältnissen abhängender Arbeitspunkt eingestellt wird, um den herum durch die Regeleinheit eine lineare Regelung durchführbar ist.

7. Vorrichtung nach Anspruch 6, **dadurch gekennzeichnet**, daß die Vorsteuerungseinheit (31) dazu ausgelegt ist, unter Berücksichtigung variierender Ventilkennlinien zu arbeiten.

8. Vorrichtung nach Anspruch 7, **gekennzeichnet durch** eine Kennlinien-Adaptionseinheit (33), welche dazu ausgelegt ist, die von der Vorsteuerungseinheit (31) verwendete Ventilkennlinie an die herrschenden Verhältnisse zu adaptieren.

9. Vorrichtung nach Anspruch 8, **dadurch gekennzeichnet**, daß die herrschenden Verhältnisse aus dem integrierenden Anteil der Regelung durch die Regeleinheit (32) ermittelt werden.

10. Vorrichtung nach Anspruch 7 oder 8, **dadurch gekennzeichnet**, daß die herrschenden Verhältnisse durch eine Schätzung ermittelt werden.
